# NEUE EUROPÄISCHE PATENTSCHRIFT

(11) **EP 3 372 131 B2**
(45) Veröffentlichungstag und Bekanntmachung des Hinweises auf die Entscheidung über den Einspruch: **26.03.2025**
(45) Hinweis auf die Patenterteilung: 20.10.2021
(21) Anmeldenummer: 17000397.4
(22) Anmeldetag: 11.03.2017
(51) Int. Cl.: A47K 3/00

(54) **DICHT- UND MONTAGEBAND-ANORDNUNG**
SEALING AND MOUNTING TAPE ASSEMBLY
SYSTÈME DE BANDE DE MONTAGE ET D'ÉTANCHÉITÉ

(43) Veröffentlichungstag der Anmeldung: 12.09.2018
(73) Patentinhaber: Sanipat GmbH, 6045 Meggen (CH)
(72) Erfinder: Gassmann, Urs, 6343 Buonas (CH)
(74) Vertreter: Prins Intellectual Property AG

(56) Entgegenhaltungen:
- EP-A1- 2 604 160
- EP-A1- 3 132 729
- EP-A2- 2 385 087
- EP-A2- 2 570 062
- DE-A1- 102017 107 375
- Pauli und Menden GmbH Rheinbreitbach: ?Wannenabdichtband MEPA-Aquaproof. Ausgabe K828053/0615 (H)

## Beschreibung

Die vorliegende Erfindung betrifft eine Dicht- und Montageband-Anordnung, wie sie insbesondere beim Setzen bzw. Anschließen einer Dusch- oder Badewanne an mindestens eine Anschlusswand oder an mindestens einen Anschlussboden oder an beides oder an mindestens einen Wandübergang oder Kombinationen hiervon Verwendung findet. Die Erfindung betrifft des Weiteren ein Verfahren zur Montage der Dusch- oder Badewanne an mindestens eine Anschlusswand oder an mindestens einen Anschlussboden oder an beides oder an mindestens einen Wandübergang oder an Kombinationen hiervon, bzw. ein Verfahren zur Verwendung der Dicht- und Montageband-Anordnung.

Solche Wannendichtbänder sind hinlänglich bekannt und weisen üblicherweise im Querschnitt einen Dicht- und Montageband-Grundkörper bzw. Trägermaterial auf, der bzw. das einen ersten, unteren Bereich mit einer vorder- bzw. wannenseitigen Klebefläche ausbildet und einen zweiten, oberen Bereich mit einer rück- bzw. wandseitigen Klebefläche.

Insbesondere in den Eckbereichen, also beim Setzen einer Wanne in ein Eck gebildet aus einer ersten und einer zweiten Anschlusswand, stellt sich jedoch das Problem, dass die Wannenecke abgerundet ist und die Eckkante zwischen der ersten und der zweiten Anschlusswand nicht. Um diesen, sowieso wegen Feuchtigkeitseinbruchs besonders gefährdeten Eckbereich dicht zu bekommen, werden beispielsweise Eckfüllprofile eingesetzt und mitverklebt.

Nachteilig ist hierbei, dass beim Einbau zusätzliche Arbeiten anfallen und der Sanitärfachmann oder Fliesen- bzw. Plattenleger für das Erreichen eines dichten und optisch ansprechenden Endergebnisses gefordert ist oder sogar vor Ort improvisieren muss.

Die Gebrauchsmusterschrift DE 20 2011 004 003 U1 beschreibt zur verbesserten Abdichtung der Eckbereiche ein Dichtband mit einem unelastischen ersten, unteren Bereich, dort erster Längsabschnitt genannt, sowie einem zweiten, oberen Bereich bzw. Längsabschnitt, der (nur) in Längsrichtung dehnbar ist. Mit Längsrichtung ist die waagerechte Erstreckungsrichtung des Dichtbandes gemeint. Dieses wird gemäß einer ersten Ausgestaltungsvariante durch unterschiedliche Dichtband-Materialien erreicht und gemäß einer zweiten Ausgestaltungsvariante durch mehrfach in parallelen Reihen angeordnete, senkrechte Schwächungen oder Einschnitte oder Löcher, welche die Dehnbarkeit des oberen Bereichs in Längsrichtung ergeben.

Bei der ersten Ausgestaltungsvariante ist nachteilig, dass exakt in demjenigen Bereich, wo das Dichtband am dichtesten und strapazierfähigsten sein soll, eine Trennnaht zwischen zwei unterschiedlichen Materialien besteht. Bei der zweiten beschriebenen Ausgestaltungsvariante mit Schwächungen, Einschnitten oder Löchern ist hingegen nachteilig, dass der obere Bereich nur in Längsrichtung dehnbar ist, weil auch eine Dehnbarkeit in Quer- und beliebige andere Richtungen wünschenswert wäre, um die Überbrückung des Eckbereichs dicht und vor allem spannungsfrei zu realisieren. Die beschriebenen Schwächungen, Einschnitte oder Löcher erzeugen überhaupt eine elastische Rückstellkraft, die einem spannungsfreien und dichten Ankleben in der Eckkante zwischen den Anschlusswänden abträglich sind. Des Weiteren, sofern Einschnitte und Löcher nur in einem Deckmaterial oder Vlies vorgesehen sein sollten, klafft dann Butyl oder anderes Klebematerial oder Stoffe frei heraus, das oder die mit dem Silikon der abschließenden Dichtfuge chemische Reaktionen eingehen könnten, was wiederum einer langanhaltenden Dichtigkeit nicht zuträglich ist.

Die Veröffentlichungsschrift EP 2 385 087 A2 offenbart eine gattungsgemäße Dicht- und Montageband-Anordnung, bei der eine Trägerfolie möglichst steif ist, damit eine möglichst hohe Stabilität bei Bewegungen gewährleistet ist. Der Nachteil hierbei ist allerdings, dass in Ecken keine wirklich dichten Lösungen erzielt werden können. Demzufolge wird ein Verlängerungs-Dichtstreifen aus einem anderen, weicheren und biegsameren Material als die Trägerfolie vorgeschlagen, der den oberen Bereich der Trägerfolie im endmontierten Zustand der Dicht- und Montageband-Anordnung über- oder unterlappend überragt bzw. überklebt.

Die Veröffentlichungsschrift EP 3 132 729 A1 offenbart ein Wannen-Anschlusssystem, das gleichermaßen für einen Wand- oder/und einen Bodenanschluss geeignet ist, indem ein flexibler Dichtstreifen an der Unterseite eines flachen Wannenrandes angeordnet ist und nach Belieben horizontal auf einem Boden ausgelegt oder vertikal an einer Anschlusswand angebracht werden kann. Dieser Dichtstreifen kann aus einer Folie bestehen, die insgesamt oder teilweise dehnbar ist, erneut, damit die ganze Dicht-Anordnung bei Bewegungen dicht bleibt.

Die Aufgabe der vorliegenden Erfindung ist, eine Dicht- und Montageband-Anordnung zu stellen, die die oben genannten Kriterien auf verbesserte Weise erfüllt. Nachteile bekannter Dichtband-Anordnungen sollen wenn möglich komplett oder weitgehend eliminiert sein.

Die Lösung der Aufgabe besteht zunächst in der Konzeption bzw. Anordnung mindestens eines Dicht- und Montaeband-Grundkörers bzw. Trägermaterials einer Dicht- und Montageband-Anordnung nach dem Anspruch 1, das aus einem beliebig in jede Richtung plastisch dehn- bzw. verformbaren Material besteht. Dieses Material kann beispielsweise ein spezielles Butyl-Band oder ein spezielles Schaumstoff- oder ein Gummi- oder gummiertes Band sein, oder aber auch ein sonstiges Klebeband mit diesen beschriebenen Eigenschaften. Das Material selbst kann selbstklebend sein und somit würde es keine separaten Klebeflächen mehr benötigen, die auf einem Trägermaterial appliziert sind. Ein plastisch dehn- bzw. verformbares, nicht selbstklebendes Trägermaterial hingegen, auf das dann aber ebenfalls plastisch dehn- bzw. verformbare Klebeflächen bzw. -schichten appliziert sind, soll ebenfalls in der Offenbarung der vorliegenden Anmeldung inkludiert sein, auch wenn es sich bei Testversuchen als schwierig herausgestellt hatte, geeignete Materialien für das Trägermaterial und die Klebeflächen bzw. -schichten zu finden, sodass die plastische Dehn- bzw. Verformbarkeit in beliebigen Richtungen bei gleichzeitiger Vermeidung von Rissen in den Klebeflächen bzw. - schichten gewährleistet ist.

Des Weiteren umfasst die erfindungsgemäße Dicht- und Montageband-Anordnung eine Deckfolie, die mindestens in dem oberen Bereich oder aber auch im unteren Bereich wannenseitig angeordnet ist und ebenfalls plastisch dehn- bzw. verformbar ist. Diese Deckfolie ist einstückig bzw. durchgehend und weist keine Schlitze oder Perforierungen oder Schwächungen auf. Durch diese Deckfolie ist gewährleistet, dass das Silikon einer Abschlussfuge zwischen dem unteren Rand der Wandfliesen oder - platten und der Wannenabbordung oder zwischen einem Anschlussboden und der Wannenabbordung oder zwischen zwei Anschlusswänden in der Vertikalen keinen Kontakt zu dem Butyl oder Klebematerial bekommen kann und chemisch reagiert.

Die plastische Dehn- bzw. Verformbarkeit des Dicht- und Montageband-Grundkörpers bzw. Trägermaterials bringt vorteilhafterweise mit sich, dass der obere Bereich beliebig in jede Eckkante zweier Anschlusswände hineingezogen und -gedrückt werden kann, in jeder beliebigen Richtung und ohne, dass Rückstellkräfte wirken. Die plastische Dehn- bzw. Verformbarkeit des Butyl- oder Klebebandes resultiert einerseits aus seiner speziellen Beschaffenheit und andererseits aus seiner Materialdicke. Je mehr gezogen wird, desto dünner wird das Material. Dieses bietet weiterhin vorteilhafterweise die Möglichkeit, Überlappungen mehrerer Dicht- und Montageband-Abschnitte zu erstellen, die nicht auftragen.

Vorzugsweise an der Rückseite, also der wandseitigen Seite des unteren Bereichs des Dicht- und Montageband-Grundkörpers bzw. Trägermaterials, oder aber optional auch an der wannenseitigen Vorderseite, ist vorzugsweise mindestens ein Schallschutz-Streifen aus schalldämmendem Schaumstoff oder Butyl angeordnet.

Die Klebeflächen, also sowohl diejenige für die Wannenabbordung, als auch diejenige für die Wand, sind vorzugsweise mit schützenden Silikonpapier-Streifen bedeckt, die bei der Montage abgezogen werden können.

Optional kann eine erfindungsgemäße Dicht- und Montageband-Anordnung mindestens einen Schnittschutz-Streifen umfassen, wie erstmalig in dem österreichischen Gebrauchsmuster GM 438/2010, umgewandelt in das österreichische Patent AT 510127, offenbart wurde. Dieser Schnittschutz-Streifen kann ein flexibler Streifen aus dünnem Metallblech, -gitter oder - geflecht sein oder aus verdichtetem Schaum- oder Kunststoff oder CFK oder Aramid-Fasern oder aus ähnlichen nicht oder nur schwer zerschneidbaren Materialien bestehen. Der Schnittschutz-Streifen kann an der wannenseitigen Vorderseite im annähernd mittigen Bereich des Dicht- und Montagebandes angeklebt sein, oder aber auch an der wandseitigen Rückseite, ebenfalls nur im annähernd mittigen Bereich. Denkbar ist es auch, dass der Schnittschutz-Streifen in das Material des Dicht- und Montageband-Grundkörpers bzw. Trägermaterials eingegossen oder eingebettet ist.

Es ist des Weiteren möglich, einen Zusatz-Dichtstreifen vorzusehen, der über den oberen Bereich des bereits plastisch verformten und an der Wand angeklebten Dicht- und Montageband-Grundkörpers bzw. Trägermaterials überlappend angeordnet wird. Dieser Zusatz-Dichtstreifen ist vorzugsweise aus einem gut flexiblen Vlies mit einer rück- bzw. wandseitigen Klebefläche gebildet und kann weiterhin optional wiederum mindestens einen Schnittschutz-Streifen integriert oder angeklebt haben, optional auch zusätzlich zu dem bereits oben beschriebenen Schnittschutz-Streifen.

Weiterhin optional kann die Dicht- und Montageband-Anordnung mindestens einen sogenannten Kapillarschutzstreifen umfassen.

Die Dicht- und Montageband-Anordnung kann des Weiteren einen im vormontierten Zustand annähernd waagerechten Schutzstreifen umfassen, der auf einer waagerechten Oberfläche der Wannenabbordung ausgebreitet oder mittels einer unterseitigen Klebefläche daran angeklebt werden kann. Dieser waagerechte Schutzstreifen kann optional mit dem Dicht- und Montageband-Grundkörper bzw. Trägermaterial verbunden sein, aber auch lose Bestandteil eines erfindungsgemäßen Dichtband-Anordnung-Sets sein. Er schützt die Wannenoberfläche bei der Montage und beim Fliesenlegen und bietet darüber hinaus eine Hilfe beim Fliesenlegen insofern, als dass der untere Rand der untersten Fliesenreihe beim Verlegen darauf abgestützt werden kann. Nach erfolgter Trocknung der Fliesen sowie nach erfolgtem Verfugen der Wandfliesen oder -platten kann der waagerechte Schutzstreifen an einer möglichen Längsperforation abgerissen werden. Der dabei zwischen dem unteren Rand der Wandfliesen oder -platten und der Wannenabbordung verbleibende Restabschnitt des waagerechten Schutzstreifens ist gleichzeitig eine Hilfe für das Verfugen mit einer Abschluss-Silikonfuge.

Die Ausgestaltungsvarianten sind mit oder ohne Schallschutz-Streifen gleichermaßen und reziprok untereinander kombinierbar mit den Ausgestaltungsvarianten mit Schnittschutz-Streifen, sowie mit den Ausgestaltungsvarianten mit überlappendem Zusatz-Dichtstreifen, mit oder ohne Schnittschutz, sowie mit den Ausgestaltungsvarianten mit Kapillar-Schutzstreifen oder einem waagerechten Schutzstreifen.

Die vorliegende Anmeldung offenbart ein Verfahren nach dem Anspruch 9 zum Setzen einer Dusch- oder Badewanne bzw. zur Verwendung einer wie offenbarten Dicht- und Montageband-Anordnung nach dem Anspruch 1, mit einem plastisch dehn- bzw. verformbaren Dicht- und Montageband-Grundkörper bzw. Trägermaterial und einer ebenfalls plastisch dehn- bzw. verformbaren, mindestens an einem zweiten, oberen Bereich des Dicht- und Montageband-Grundkörpers bzw. Trägermaterials wannenseitig angeordneten Deckfolie; unter Ausführung folgender grundsätzlicher Verfahrensschritte:
a) - Abziehen eines ersten Silikonpapier-Streifens von einem ersten, unteren Bereich des Dicht- und Montageband-Grundkörpers bzw. Trägermaterials;
b) - Ankleben des ersten, unteren Bereichs des Dicht- und Montageband-Grundkörpers bzw. Trägermaterials an einer Wannenabbordung der Dusch- oder Badewanne;
c) - Setzen der Dusch- oder Badewanne in ein Eck gebildet aus einer ersten und einer zweiten Anschlusswand oder an mindestens einen Anschlussboden oder an mindestens einen Wandübergang;
d) - Abziehen eines zweiten Silikonpapier-Streifens von dem zweiten, oberen Bereich des Dicht- und Montageband-Grundkörpers bzw. Trägermaterials;
e) - Ankleben des zweiten, oberen Bereichs des Dicht- und Montageband-Grundkörpers bzw. Trägermaterials an der ersten und an der zweiten Anschlusswand oder an mindestens einen Anschlussboden oder an mindestens einen Wandübergang;
f) - plastisches Dehnen, Verformen und Anbringen des zweiten, oberen Bereichs des Dicht- und Montageband-Grundkörpers bzw. Trägermaterials hinein in das Eck gebildet aus der ersten und der zweiten Anschlusswand oder an den Anschlussboden oder Kombinationen hiervon;
g) - falls vorgesehen, Ausbreiten, oder falls wiederum vorgesehen, Ankleben eines waagerechten Schutzstreifens an einer waagerechten Oberfläche der Wannenabbordung;
h) - falls vorgesehen, Abziehen eines dritten und vierten Silikonpapier-Streifens von der wandseitigen Rückseite eines Zusatz-Dichtstreifens;
i) - falls vorgesehen, Ankleben eines Zusatz-Dichtstreifens überlappend über den zweiten, oberen Bereich des Dicht- und Montageband-Grundkörpers bzw. Trägermaterials;
j) - Verlegen von Wandfliesen oder -platten überlappend über den zweiten, oberen Bereich des Dicht- und Montageband-Grundkörpers bzw. Trägermaterials;
k) - falls vorgesehen, Abreißen des waagerechten Schutzstreifens an einer Längsperforation;
l) - Verfugen mit einer Abschluss-Silikonfuge zwischen dem unteren Rand der Wandfliesen oder -platten und der Wannenabbordung.

Ein erfindungsgemäßes Dicht- und Montageband bzw. eine damit realisierte erfindungsgemäße Dicht- und Montageband-Anordnung bringt folgende Vorteile:
- Der Sanitärfachmann muss bei der Montage der Dusch- oder Badewanne für die Eckbereiche keine zusätzlichen Anpassungsarbeiten leisten und keine Improvisationslösungen suchen.
- Die erfindungsgemäße Dicht- und Montageband-Anordnung ist langanhaltend dicht.
- Der Dicht- und Montageband-Grundkörper bzw. Trägermaterial ist einstückig, ohne Trennnähte.
- Die erfindungsgemäße Dicht- und Montageband-Anordnung hat wenig Komponenten und ist einfach in der Herstellung.
- Der Dicht- und Montageband-Grundkörper bzw. Trägermaterial ist beliebig in alle Richtungen dehn- bzw. verformbar.
- Es wirken keine Rückstellkräfte auf die Verklebungen.
- Es findet kein Kontakt zwischen Butyl oder Klebematerial und Silikon statt.
- Es sind Überlappungen von Dicht- und Montageband-Abschnitten möglich, die nicht auftragen.
- Die Dicht- und Montageband-Anordnung ist schallschutzoptimiert.
- Die Dicht- und Montageband-Anordnung ist gegen Zerschneiden geschützt.

Weitere oder vorteilhafte Ausgestaltungen einer erfindungsgemäßen Dicht- und Montageband-Anordnung bilden die Gegenstände der abhängigen Ansprüche.

Die Bezugszeichenliste ist Bestandteil der Offenbarung.

Anhand von Figuren wird die Erfindung symbolisch und beispielhaft näher erläutert. Die Figuren werden zusammenhängend und übergreifend beschrieben. Sie stellen schematische und beispielhafte Darstellungen dar und sind nicht maßstabsgetreu, auch in der Relation der einzelnen Bestandteile zueinander nicht. Gleiche Bezugszeichen bedeuten das gleiche Bauteil, Bezugszeichen mit unterschiedlichen Indizes geben funktionsgleiche oder ähnliche Bauteile an.

Es zeigen dabei
Fig. 1 eine symbolische und beispielhafte perspektivische Ansicht von schräg oben auf eine erste Ausgestaltungsvariante einer erfindungsgemäßen Dicht- und Montageband-Anordnung, beim Setzen einer Dusch- oder Badewanne in ein Eck gebildet von zwei Anschlusswänden;
Fig. 2 eine symbolische und beispielhafte perspektivische Ansicht ebenfalls von schräg oben auf die erste Ausgestaltungsvariante einer erfindungsgemäßen Dicht- und Montageband-Anordnung aus der Fig. 1, nachdem der plastisch dehn- und verformbare obere Bereich des Dichtbandes in das Eck hineingezogen und -gedrückt worden ist;
Fig. 3 eine symbolische und beispielhafte Schnittansicht einer zweiten Ausgestaltungsvariante einer erfindungsgemäßen Dicht- und Montageband-Anordnung mit separaten Klebeschichten, im montierten Zustand;
Fig. 4 eine symbolische und beispielhafte Schnittansicht einer dritten Ausgestaltungsvariante einer erfindungsgemäßen Dicht- und Montageband-Anordnung mit einem selbstklebenden Dicht- und Montageband-Grundkörper bzw. Trägermaterial, ebenfalls im montierten Zustand;
Fig. 5 eine symbolische und beispielhafte Schnittansicht einer vierten Ausgestaltungsvariante einer weiterhin erfindungsgemäßen Dicht- und Montageband-Anordnung mit einem Schallschutz- und einem Kapillarschutzstreifen, ebenfalls im montierten Zustand;
Fig. 6 eine symbolische und beispielhafte Schnittansicht einer fünften Ausgestaltungsvariante einer weiterhin erfindungsgemäßen Dicht- und Montageband-Anordnung mit einer sich über den oberen und unteren Bereich wannenseitig erstreckenden Deckfolie und einer zweiten Butyl- oder Klebeschicht;
Fig. 7 eine symbolische und beispielhafte Schnittansicht einer sechsten Ausgestaltungsvariante einer weiterhin erfindungsgemäßen Dicht- und Montageband-Anordnung mit einem Schnittschutz-Streifen, ebenfalls im montierten Zustand;
Fig. 8 eine symbolische und beispielhafte Schnittansicht einer siebten Ausgestaltungsvariante einer weiterhin erfindungsgemäßen Dicht- und Montageband-Anordnung mit einem überlappenden Zusatz-Dichtstreifen mit Schnittschutz, ebenfalls im montierten Zustand;
Fig. 9 eine symbolische und beispielhafte Schnittansicht einer achten Ausgestaltungsvariante einer weiterhin Dicht- und Montageband-Anordnung, die nicht Teil der Erfindung ist, mit einem waagerechten Schutzstreifen mit einer Längsperforation, ebenfalls im montierten Zustand und
Fig. 10 eine symbolische und beispielhafte Schnittansicht einer neunten Ausgestaltungsvariante einer weiterhin erfindungsgemäßen Dicht- und Montageband-Anordnung mit einem wannenseitig angeordneten Schallschutz-Streifen und einer zweiten Butyl-Schicht, alles ebenfalls im montierten Zustand einer Dusch- oder Badewanne.

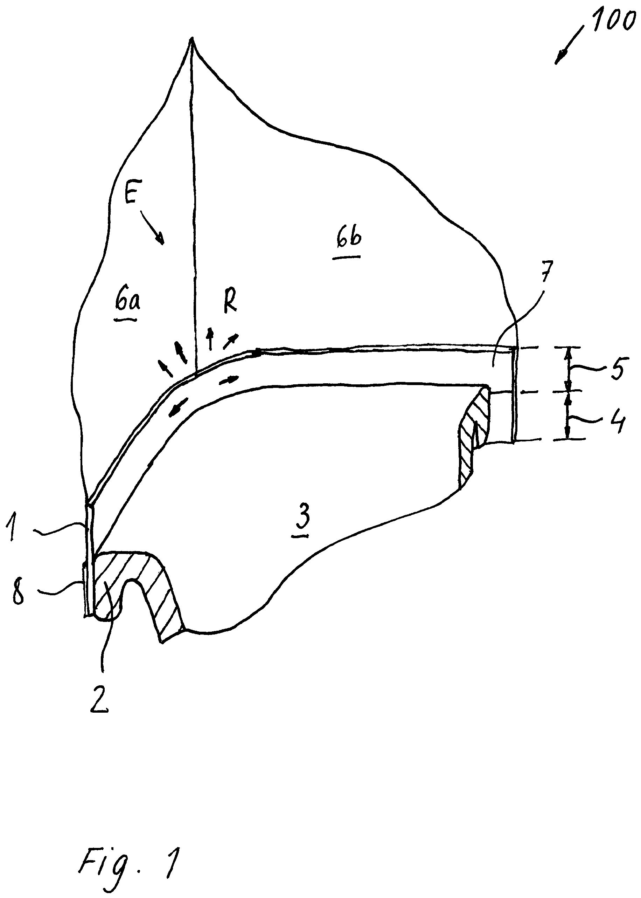

Die Fig. 1 zeigt in einer symbolischen und beispielhaften perspektivischen Ansicht von schräg oben eine erste Ausgestaltungsvariante einer erfindungsgemäßen Dicht- und Montageband-Anordnung 100, die einen in beliebige Richtungen R plastisch dehn- und verformbaren Dicht- und Montageband-Grundkörper bzw. Trägermaterial 1 umfasst, wobei der bzw. das Letztere bereits an einer Wannenabbordung 2 einer Dusch- oder Badewanne 3 mit einem ersten, unteren Bereich 4 angeklebt ist. Ein zweiter, oberer Bereich 5 ragt über die Wannenabbordung 2 hinaus und kann plastisch so gedehnt und verformt werden, dass er in ein Eck E, gebildet aus einer ersten Anschlusswand 6a und einer zweiten Anschlusswand 6b, dicht eingefügt werden kann.

Die erfindungsgemäße Dicht- und Montageband-Anordnung 100 umfasst des Weiteren eine plastisch dehn- bzw. verformbare Deckfolie 7 wannenseitig und optional an dem oberen Bereich 5, sowie einen Schallschutz-Streifen 8, der wandseitig an dem unteren Bereich 4 angeordnet ist.

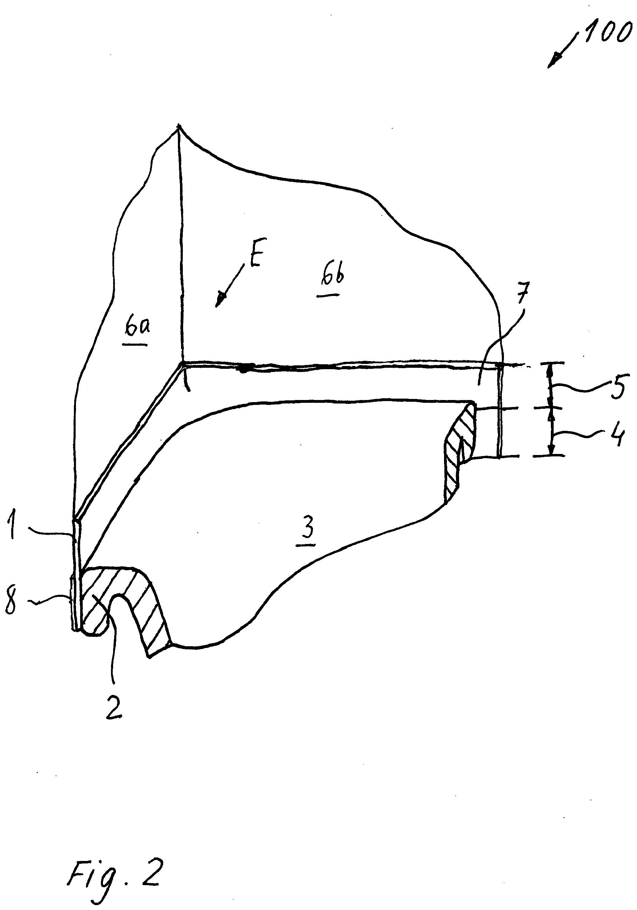

In der Fig. 2 ist in einer symbolischen und beispielhaften und perspektivischen Ansicht die Dicht- und Montageband-Anordnung 100 aus der Fig. 1 gezeigt, nachdem der obere Bereich 5 in das Eck E gedehnt und hineingedrückt worden ist.

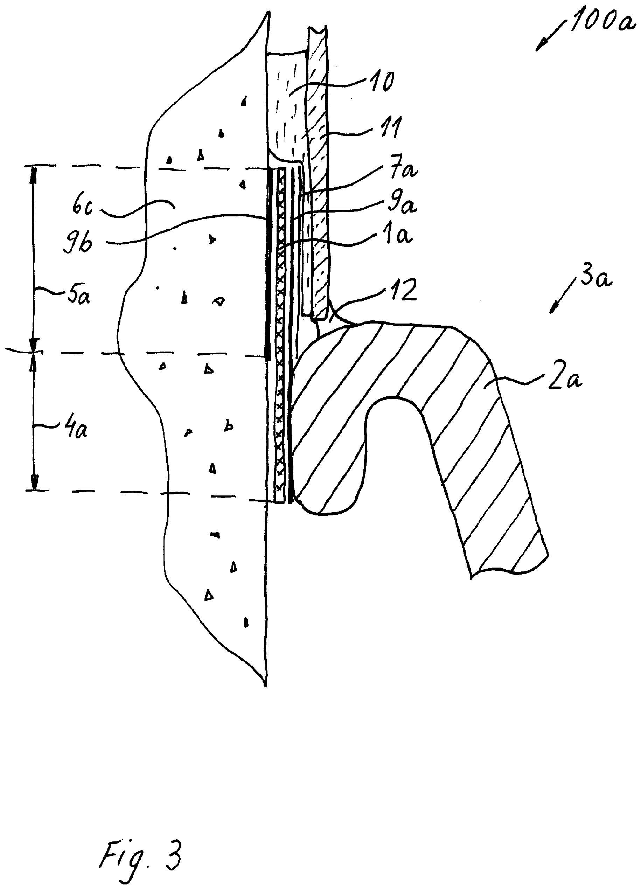

Die Fig. 3 zeigt, im endmontierten Zustand, in einer symbolischen und beispielhaften Schnittansicht eine zweite Ausgestaltungsvariante einer weiterhin erfindungsgemäßen Dicht- und Montageband-Anordnung 100a, die sich im Wesentlichen dadurch auszeichnet, dass ein plastisch dehn- bzw. verformbarer Dicht- und Montageband-Grundkörper bzw. Trägermaterial 1a nicht aus einem insgesamt selbstklebenden Material besteht und demzufolge hin zu einer Wannenabbordung 2a einer Dusch- oder Badewanne 3a eine erste, separate Klebeschicht 9a aufweist und hin zu einer Anschlusswand 6c eine zweite, separate Klebeschicht 9b. Die erste, separate Klebeschicht 9a erstreckt sich vorzugsweise sowohl über einen ganzen ersten, unteren Bereich 4a und einen ganzen zweiten, oberen Bereich 5a des plastisch dehn- und verformbaren Dicht- und Montageband-Grundkörpers bzw. Trägermaterials 1a.

Wannenseitig erstreckt sich eine plastisch dehn- und verformbare Deckfolie 7a über den zweiten bzw. oberen Bereich 5a.

Es ist des Weiteren in dieser Fig. 3 ersichtlich, wie ein Fliesenkleber 10 und eine Wandfliese oder -platte 11 aufgebracht sind, sowie wo eine Abschluss-Silikonfuge 12 gesetzt wird.

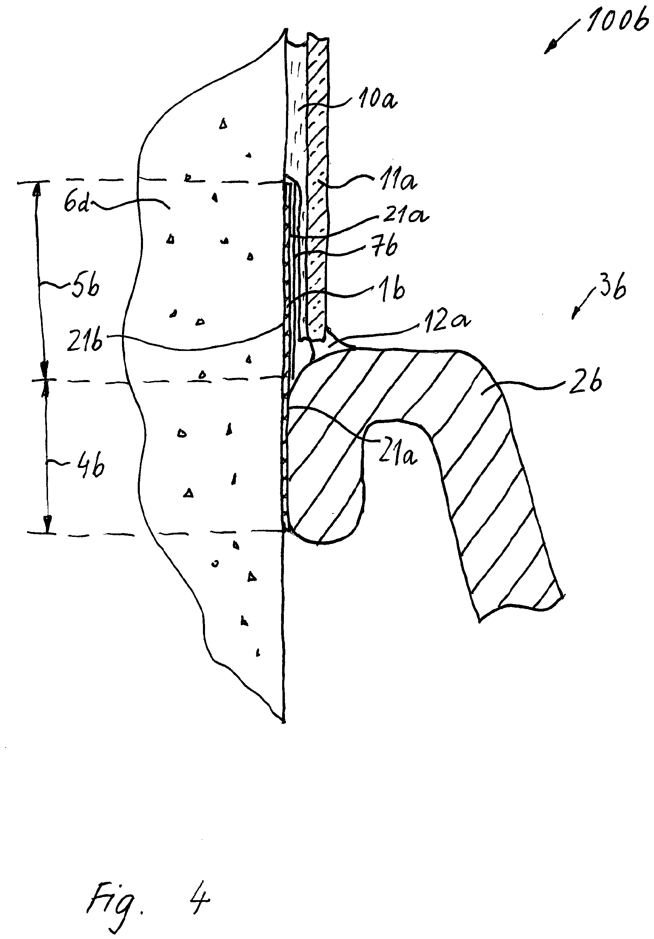

In der Fig. 4 ist, erneut im endmontierten Zustand, in einer symbolischen und beispielhaften Schnittansicht eine weiterhin bevorzugte, dritte Ausgestaltungsvariante einer erfindungsgemäßen Dicht- und Montageband-Anordnung 100b gezeigt, bei der ein plastisch dehn- bzw. verformbarer Dicht- und Montageband-Grundkörper bzw. Trägermaterial 1b insgesamt aus selbstklebendem Material besteht und somit die separaten Klebeschichten 9a und 9b aus der Fig. 3 überflüssig sind. Der Dicht- und Montageband-Grundkörper bzw. Trägermaterial 1b formt vielmehr selber jeweils eine durchgehende wannenseitige Klebefläche 21a sowie eine wandseitige Klebefläche 21b aus.

Der plastisch dehn- bzw. verformbare Dicht- und Montageband-Grundkörper bzw. das Trägermaterial 1b klebt wannenseitig in einem ersten bzw. unteren Bereich 4b direkt an einer Wannenabbordung 2b einer Dusch- oder Badewanne 3b und wandseitig, hin zu einer Anschlusswand 6d, ebenfalls direkt, und zwar sowohl über dem ersten, unteren Bereich 4b, als auch über einem zweiten, oberen Bereich 5b.

Wannenseitig ist der zweite, obere Bereich 5b erneut von einer durchgehenden, plastisch dehn- bzw. verformbaren Deckfolie 7b bedeckt.

Eine Wandfliese oder -platte 11a ist mittels Fliesenkleber 10a den zweiten, oberen Bereich 5b überlappend aufgebracht und eine Abschluss-Silikonfuge 12a schließt den unteren Rand der Wandfliese oder -platte 11a zu der Wannenabbordung 2b ab.

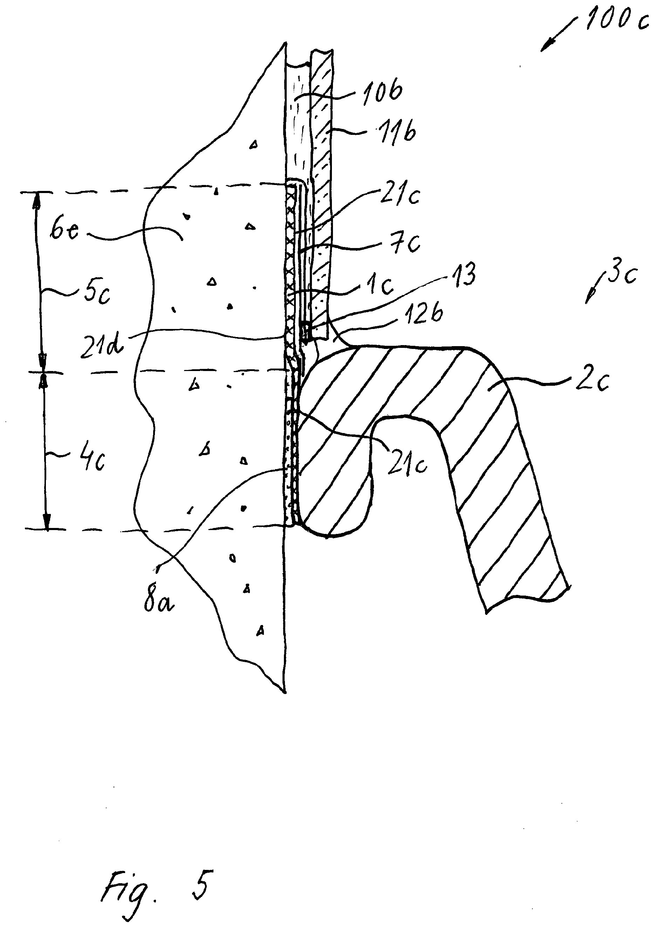

Die Fig. 5 zeigt, erneut im endmontierten Zustand, in einer weiteren symbolischen und beispielhaften Schnittansicht eine vierte Ausgestaltungsvariante einer weiterhin erfindungsgemäßen Dicht- und Montageband-Anordnung 100c, die sich dadurch auszeichnet, dass in einem ersten, unteren Bereich 4c eines nach wie vor plastisch dehn- bzw. verformbaren Dicht- und Montageband-Grundkörpers bzw. Trägermaterials 1c, hin zu einer Anschlusswand 6e, exemplarisch ein Schallschutz-Streifen 8a vorgesehen ist. Gegenüberliegend, beispielsweise an der Unterkante einer Wandfliese oder -platte 11b kann optional ein Kapillarschutzstreifen 13 angeordnet sein.

Dadurch, dass der Dicht- und Montageband-Grundkörper bzw. Trägermaterial 1c selbstklebend ist, wird jeweils durchgehend über beide Bereiche eine wannenseitige Klebefläche 21c sowie eine wandseitige Klebefläche 21d ausgeformt.

Alle anderen Komponenten sind aus den bisherigen Figuren bereits bekannt und werden deshalb nicht mehr erwähnt, sondern nur mit fortgeführten Indizes dargestellt.

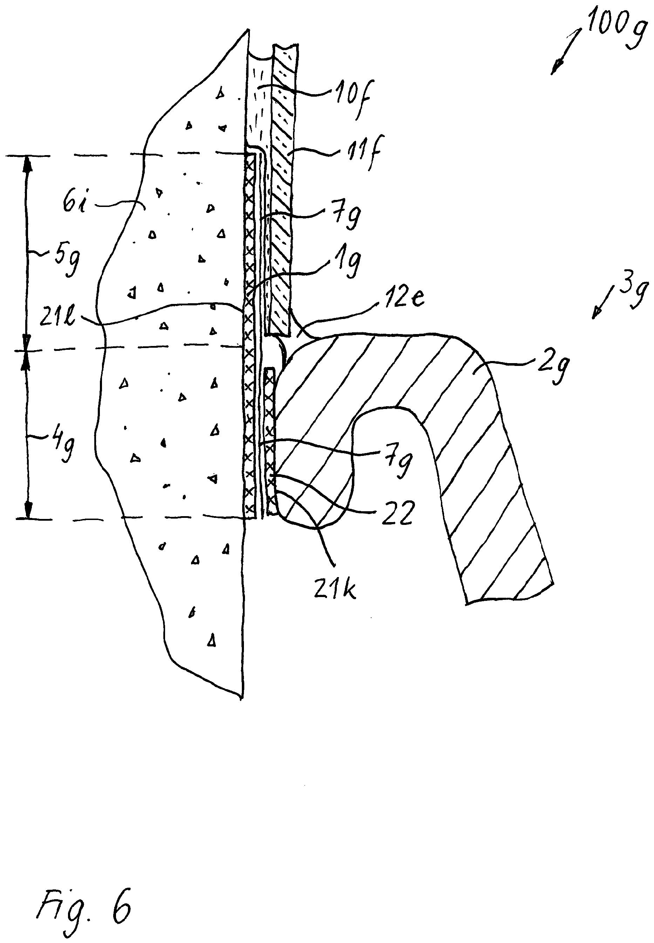

Die Fig. 6 zeigt, erneut im endmontierten Zustand, in einer weiteren symbolischen und beispielhaften Schnittansicht eine fünfte Ausgestaltungsvariante einer weiterhin erfindungsgemäßen Dicht- und Montageband-Anordnung 100g, bei der ein nach wie vor plastisch dehn- bzw. verformbarer Dicht- und Montageband-Grundkörper bzw. Trägermaterial 1g selbstklebend ist und somit direkt mit einer wandseitigen Klebefläche 211 an einer Anschlusswand 6i angeordnet ist. Wannenseitig erstreckt sich dieses Mal eine Deckfolie 7g nicht nur über einen zweiten, oberen Bereich 5g, sondern auch durchgehend über einen ersten, unteren Bereich 4g. Somit ist eine zweite Butyl- oder Kleber-Schicht 22 vorgesehen, die eine wannenseitige Klebefläche 21k zu einer Wannenabbordung 2g einer Dusch- oder Badewanne 3g ausformt.

Die auf diese Weise im Querschnitt realisierte doppelte Butyl- oder Kleber-Schicht verbessert den Schallschutz, es wäre aber zusätzlich gut möglich, den Schallschutz-Streifen 8a aus der Fig. 5 vorzusehen.

Ansonsten ist wie gehabt eine Fliesenkleberschicht 10f und eine Wandfliese oder -platte 11f überlappend über dem zweiten, oberen Bereich 5g angeordnet und eine Abschluss-Silikonfuge 12e. In einer späteren Figur wird noch eine Ausgestaltungsvariante offenbart, bei der die Fliesenkleberschicht 10f nicht direkt auf die Deckfolie 7g appliziert wird, sondern auf einen überlappenden Vlies-Streifen.

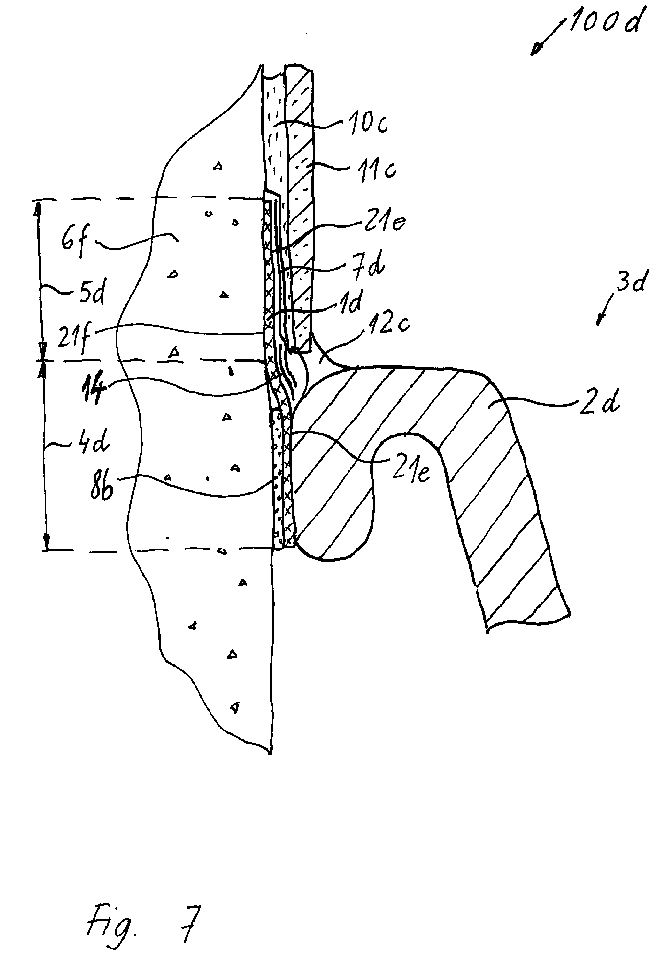

In der Fig. 7 ist im endmontierten Zustand eine sechste Ausgestaltungsvariante einer weiterhin erfindungsgemäßen Dicht- und Montageband-Anordnung 100d symbolisch und beispielhaft sowie geschnitten dargestellt, die sich dadurch auszeichnet, dass nach wie vor die aus der Fig. 5 bekannten Komponenten vorhanden sind und deshalb nicht mehr explizit erwähnt, sondern nur mittels der Indizes fortgeführt sind.

Was diese Ausgestaltungsvariante einer weiterhin erfindungsgemäßen Dicht- und Montageband-Anordnung 100d jedoch von den bisherigen unterscheidet, ist ein Schnittschutz-Streifen 14, der letztendlich im montierten Zustand rückseitig hinter einer Abschluss-Silikonfuge 12c angeordnet ist. Falls die Abschluss-Silikonfuge 12c entfernt oder erneuert werden muss, wird in der Regel ein Messer oder Tepppichmesser verwendet, dass dann auf Widerstand stößt und so ein dahinter liegender Dicht- und Montageband-Grundkörper bzw. Trägermaterial 1d intakt bleibt. Dieser Schnittschutz-Streifen 14 kann ab Werk an einer Klebefläche 21e des in diesem Falle selbstklebenden Dicht- und Montageband-Grundkörpers bzw. Trägermaterials 1d angeklebt sein, oder aber auch nach erfolgter Dehnung eines zweiten, oberen Bereichs 5d des plastisch dehn- bzw. verformbaren Dicht- und Montageband-Grundkörpers bzw. Trägermaterials 1d vor Ort beim Einbau aufgeklebt werden. Eine ebenfalls plastisch dehn- bzw. verformbare Deckfolie 7d kann hierbei den Schnittschutz-Streifen 14 überlappen, so wie dargestellt, oder auch nicht.

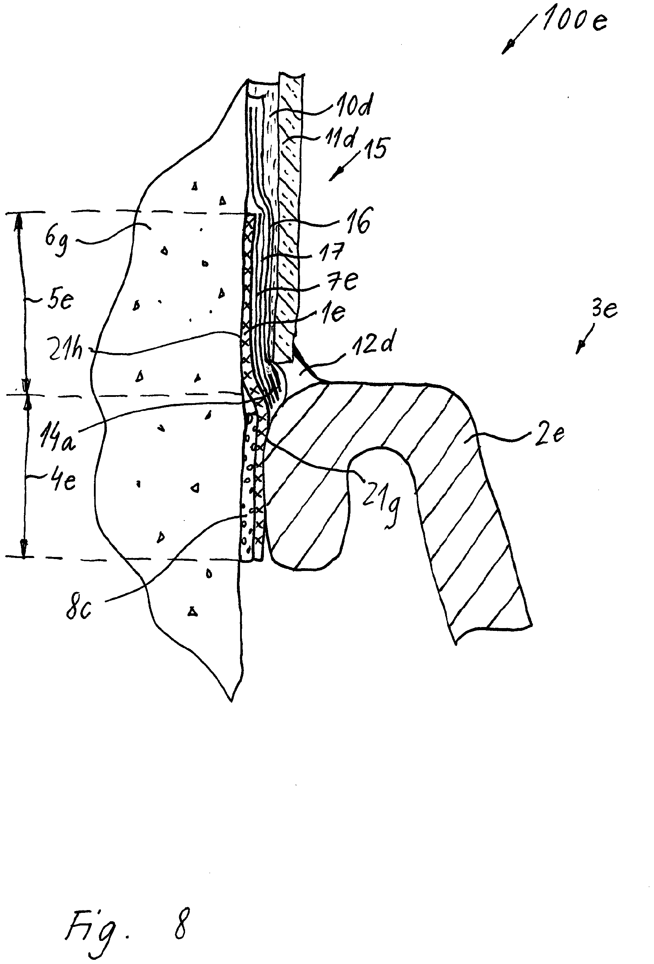

Die Fig. 8 zeigt, erneut im endmontierten Zustand, eine siebte Ausgestaltungsvariante einer weiterhin erfindungsgemäßen Dicht- und Montageband-Anordnung 100e, die im Unterschied zu den bisherigen Ausgestaltungsvarianten um einen einen zweiten, oberen Bereich 5e überlappenden Zusatz-Dichtstreifen 15 ergänzt ist. Dieser Zusatz-Dichtstreifen 15 umfasst vorzugsweise ein Vlies 16 und eine Klebeschicht 17 und hat weiterhin vorzugsweise einen Schnittschutz-Streifen 14a dazwischen eingebettet.

Ansonsten umfasst die Dicht- und Montageband-Anordnung 100e wie gehabt einen plastisch dehn- bzw. verformbaren Dicht- und Montageband-Grundkörper bzw. Trägermaterial 1e, der bzw. das in einem ersten, unteren Bereich 4e wannenseitig direkt an einer Wannenabbordung 2e einer Dusch- oder Badewanne 3e angeklebt ist. Ebenfalls im ersten, unteren Bereich 4e, aber gegenseitig zu einer Anschlusswand 6g hin, ist ein Schallschutz-Streifen 8c angeordnet.

An dem zweiten, oberen Bereich 5e ist wannenseitig nach wie vor eine plastisch dehn- bzw. verformbare Deckfolie 7e angeordnet. Der zweite, obere Bereich 5e des plastisch dehn- bzw. verformbaren Dicht- und Montageband-Grundkörpers bzw. Trägermaterials 1e, aber auch der überlappende Zusatz-Dichtstreifen 15 sind von Fliesenkleber 10d sowie Wandfliesen oder -platten 11d bedeckt. Eine Abschluss-Silikonfuge 12d verbindet den unteren Rand der Wandfliese oder -platte 11d mit der Wannenabbordung 2e.

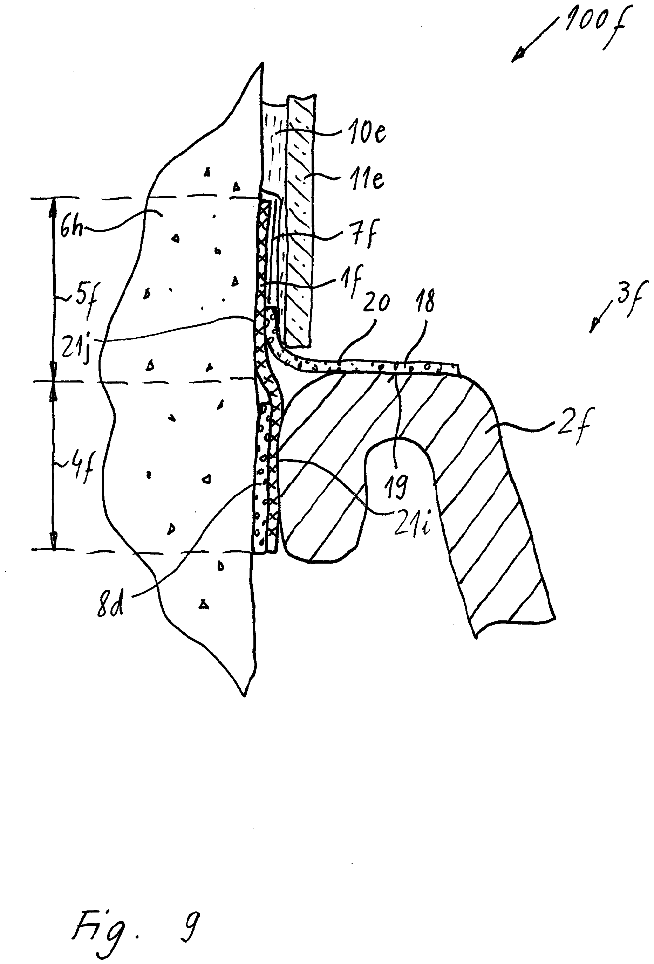

In der Fig. 9 ist, erneut im endmontierten Zustand, eine achte Ausgestaltungsvariante einer weiteren Dicht- und Montageband-Anordnung 100f gezeigt, die sich durch einen an einem plastisch dehn- bzw. verformbaren Dicht- und Montageband-Grundkörper bzw. Trägermaterial 1f angeordneten annähernd waagerechten Schutzstreifen 18 auszeichnet. Dieser Schutzstreifen 18 kann, wie dargestellt, mit dem Dicht- und Montageband-Grundkörper bzw. Trägermaterial 1f verklebt sein, aber auch lose Bestandteil eines Dichtband-Anordnungs-Sets sein und dient dem Schutz einer annähernd waagerechten Oberfläche 19 einer Wannenabbordung 2f einer Dusch- oder Badewanne 3f, beim Montieren und beim Fliesenlegen, und kann nach erfolgter Arbeit (aber noch vor dem Verfugen mit einer nicht näher dargestellten Abschluss-Silikonfuge) an einer optionalen Längsperforation 20 abgerissen werden.

Alle restlichen Komponenten dieser Ausgestaltungsvariante sind bereits bekannt und deshalb nur mit entsprechend fortgeführten Indizes in der Fig. 8 dargestellt und hier nicht mehr einzeln aufgeführt.

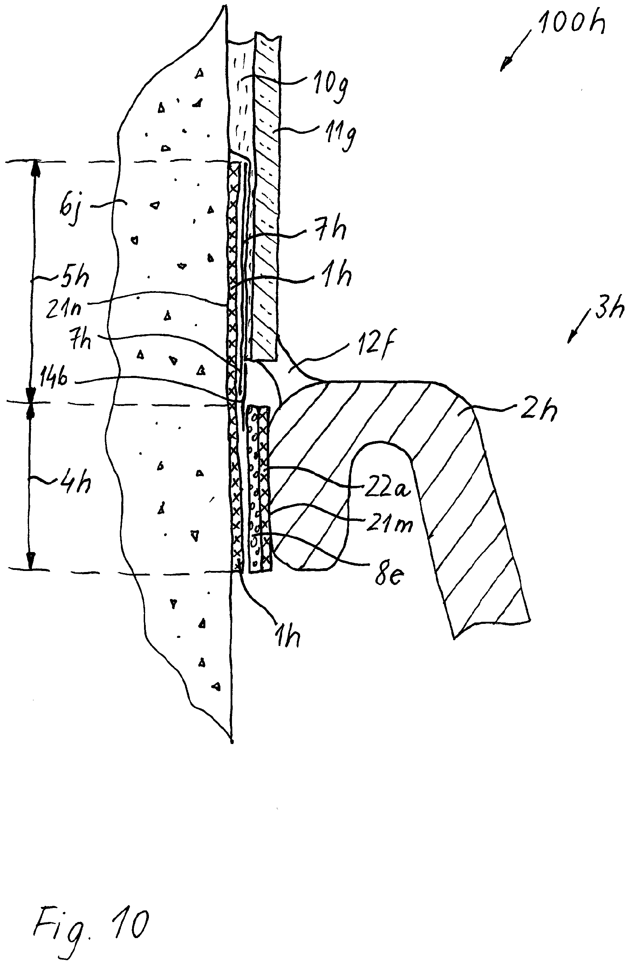

Die Fig. 10 zeigt, erneut im endmontierten Zustand, eine neunte Ausgestaltungsvariante einer weiterhin erfindungsgemäßen Dicht- und Montageband-Anordnung 100h, bei der ein nach wie vor plastisch dehn- bzw. verformbarer Dicht- und Montageband-Grundkörper bzw. Trägermaterial 1h selbstklebend ist und somit ohne einer zusätzlichen Klebeschicht direkt mittels einer wandseitigen Klebefläche 21n an einer Anschlusswand 6j angeordnet ist. Wannenseitig ist eine ebenfalls plastisch dehn- bzw. verformbare Deckfolie 7h nur in einem zweiten, oberen Bereich 5h des Dicht- und Montageband-Grundköpers bzw. Trägermaterials 1h vorgesehen, sie kann sich aber auch wie in der Fig. 6 auch über einen ersten, unteren Bereich 4h des Dicht- und Montageband-Grundkörpers bzw. Trägermaterials 1h erstrecken.

Jedenfalls ist bei dieser Ausgestaltungsvariante ein Schallschutz-Streifen 8e nicht mehr an der wandseitigen Rückseite vorgesehen, sondern an der wannenseitigen Vorderseite, beispielhaft direkt angeklebt an dem Dicht- und Montageband-Grundkörper bzw. Trägermaterial 1h in seinem ersten, unteren Bereich 4h. Der dargestellte Luftspalt dazwischen darf übrigens nicht verwirren und ist im konkreten Fall den vorläufig provisorischen Handzeichnungen geschuldet. Quasi im Nachgang und der guten Ordnung halber sei erwähnt, dass in allen Figuren dünne Folien und Materialien teilweise nur mit einer Linie dargestellt sind und wenn kein fiktiver Luftspalt - obwohl die Materialien miteinander verklebt sind - gezeichnet werden würde, dann könnte man diese Materialien nicht erkennen. Die jeweilige Verklebung ergibt sich aus dem beschriebenen Kontext.

Des Weiteren ist eine zweite Butyl- oder Kleber-Schicht 22a angeordnet, die eine wannenseitige Klebefläche 21m zu einer Wannenabbordung 2h einer Dusch- oder Badewanne 3h ausformt.

Falls, wie oben erwähnt, die Deckfolie 7h sich auch über den ersten, unteren Bereich 4h erstreckt, kann eine zweite Butyl- oder Kleber-Schicht die Verbindung zwischen dem Dicht- und Montageband-Grundkörper bzw. Trägermaterial 1h und dem Schallschutz-Streifen 8e erzeugen und dann wird die dargestellte zweite Butyl- oder Kleber-Schicht 22a zu einer dritten.

Vorzugsweise wie dargestellt nur teilweise gefasst, kann ein Schnittschutz-Streifen 14b zwischen den beschriebenen Schichten angeordnet sein. Optional oder vorzugsweise so, dass ein oberer Bereich des Schnittschutz-Streifens 14b frei auf der nicht klebenden Deckfolie 7h gleiten kann, wenn der zweite, obere Bereich 5h des plastisch dehn- bzw. verformbaren Dicht- und Montageband-Grundkörpers bzw. Trägermaterials 1h gedehnt und verformt wird.

Ansonsten überlappt eine Fliesenkleberschicht 10g und eine Wandfliese oder -platte 11g wie gehabt den zweiten, oberen Bereich 5h, aber auch hier sei ausdrücklich darauf hingewiesen, dass eine Kombination mit der Ausgestaltungsvariante einer erfindungsgemäßen Dicht- und Montageband-Anordnung 100e aus der Fig. 8 gut möglich ist, bei der unterhalb des Fliesenklebers 10g bzw. dort 10d ein überlappender Zusatz-Dichtstreifen 15 vorgesehen ist.

### Bezugszeichenliste

1, 1a-1h - plastisch dehn- bzw. verformbarer Dicht- und Montageband-Grundkörper bzw. Trägermaterial
2, 2a-2h - Wannenabbordung
3, 3a-3h - Dusch- oder Badewanne
4, 4a-4h - erster bzw. unterer Bereich von 1
5, 5a-5h - zweiter bzw. oberer Bereich von 1
6a - erste Anschlusswand
6b - zweite Anschlusswand
6c-6j - Anschlusswand
7, 7a-7h - plastisch dehn- bzw. verformbare Deckfolie
8, 8a-8e - Schallschutz-Streifen
9a, 9b - separate Klebeschicht, separate Klebefläche
10, 10a-10g - Fliesenkleber
11, 11a-11g - Wandfliese oder -platte
12, 12a-12f - Abschluss-Silikonfuge
13 - Kapillarschutzstreifen
14, 14a, 14b - Schnittschutz-Streifen
15 - überlappender Zusatz-Dichtstreifen
16 - Vlies
17 - Klebeschicht
18 - waagerechter Schutzstreifen
19 - waagerechte Oberfläche von 2f
20 - Längsperforation
21a, 21c, 21e, 21g, 21i, 21k, 21m - wannenseitige Klebefläche
21b, 21d, 21f, 21h, 21j, 211, 21n - wandseitige Klebefläche
22, 22a - zweite Butyl- oder Kleber-Schicht
100, 100a-100f - Dicht- und Montageband, Dicht- und Montageband-Anordnung
E - Eck gebildet von 6a und 6b
R - Richtung

## Patentansprüche

1. Dicht- und Montageband-Anordnung (100, 100a-100e, 100h) für das Setzen einer Dusch- oder Badewanne (3, 3a-3e, 3h) an mindestens eine Anschlusswand (6a-6g, 6j) oder mindestens einen Anschlussboden, mit einem Dicht- und Montageband-Grundkörper bzw. Trägermaterial (1, 1a-1e, 1h), der bzw. das einen ersten, unteren Bereich (4, 4a-4e, 4h) ausformt mit einer wannenseitigen Klebefläche (9a, 21a, 21c, 21e, 21g, 21k, 21m) hin zu einer Wannenabbordung (2, 2a-2e, 2h) der Dusch- oder Badewanne (3, 3a-3e, 3h) und einen zweiten, oberen Bereich (5, 5a-5e, 5h) mit einer wandseitigen Klebefläche (9b, 21b, 21d, 21f, 21h, 211, 21n) hin zu der mindestens einen Anschlusswand, wobei der Dicht- und Montageband-Grundkörper bzw. Trägermaterial aus einem in beliebige Richtungen (R) plastisch dehn- und verformbaren Material besteht und wobei im endmontierten Zustand eine durchgehend-einstückige, wannenseitig mindestens an dem zweiten, oberen Bereich (5, 5a-5h) und mindestens von dem unteren Rand des zweiten, oberen Bereichs bis zu dem oberen Rand des zweiten, oberen Bereichs angeordnete Deckfolie (7, 7a-7e, 7h) ebenfalls plastisch dehn- und verformbar ist.

2. Dicht- und Montageband-Anordnung (100, 100a-100h) nach Anspruch 1, wobei das Material des Dicht- und Montageband-Grundkörpers bzw. Trägermaterials selbstklebend ist und die Klebeflächen (21a, 21c, 21e, 21g, 21k, 21m; 21b, 21d, 21f, 21h, 211, 21n) selbst ausformt.

3. Dicht- und Montageband-Anordnung (100, 100c-100h) nach Anspruch 1 oder 2, wobei an dem ersten, unteren Bereich wand- oder/und wannenseitig mindestens ein Schallschutz-Streifen (8, 8a-8c, 8e) angeordnet ist.

4. Dicht- und Montageband-Anordnung (100e) nach einem der vorhergehenden Ansprüche, wobei der zweite, obere Bereich (5e) des Dicht- und Montageband-Grundkörpers (1e) von einem Zusatz-Dichtstreifen (15) wannenseitig überlappt ist.

5. Dicht- und Montageband-Anordnung (100d, 100e, 100h) nach einem der vorhergehenden Ansprüche, wobei die Dicht- und Montageband-Anordnung (100d, 100e, 100h) mindestens einen Schnittschutz-Streifen (14, 14a, 14b) umfasst.

6. Dicht- und Montageband-Anordnung (100c) nach einem der vorhergehenden Ansprüche, wobei die Dicht- und Montageband-Anordnung (100c) mindestens einen Kapillarschutzstreifen (13) umfasst.

7. Dicht- und Montageband-Anordnung (100f) nach einem der vorhergehenden Ansprüche, wobei die Dicht- und Montageband-Anordnung einen waagerechten Schutzstreifen (18) umfasst, der auf einer waagerechten Oberfläche (19) der Wannenabbordung (2f) ausbreit- oder anklebbar ist.

8. Dicht- und Montageband-Anordnung (100g) nach einem der vorhergehenden Ansprüche, wobei die Deckfolie (7g) auch an dem ersten, unteren Bereich (4g) angeordnet ist und die Dichtband-Anordnung (100g) im Querschnitt mindestens eine zweite Butyl- oder Kleber-Schicht (22, 22a) umfasst.

9. Verfahren zum Setzen einer Dusch- oder Badewanne (3, 3a-3e, 3h) bzw. zur Verwendung einer Dicht- und Montageband-Anordnung (100, 100a-100e, 100h) nach einem der vorhergehenden Ansprüche, mit einem plastisch dehn- bzw. verformbaren Dicht- und Montageband-Grundkörper bzw. Trägermaterial (1, 1a-1e, 1h) und mit einer ebenfalls plastisch dehn- bzw. verformbaren, mindestens an dem zweiten, oberen Bereich (5, 5a-5h) und mindestens von dem unteren Rand des zweiten, oberen Bereichs (5, 5a-5e, 5h) bis zu dem oberen Rand des zweiten, oberen Bereichs des Dicht- und Montageband-Grundkörpers bzw. Trägermaterials wannenseitig angeordneten Deckfolie (7, 7a-7e, 7h) wobei folgende Verfahrensschritte ausgeführt werden:
a) - Abziehen eines ersten Silikonpapier-Streifens von einem ersten, unteren Bereich (4, 4a-4e,4h) des Dicht- und Montageband-Grundkörpers bzw. Trägermaterials;
b) - Ankleben des ersten, unteren Bereichs des Dicht- und Montageband-Grundkörpers bzw. Trägermaterials an einer Wannenabbordung (2, 2a-2e, 2h) der Dusch- oder Badewanne (3, 3a-3e, 3h);
c) - Setzen der Dusch- oder Badewanne in ein Eck (E) gebildet aus einer ersten Anschlusswand (6a) und einer zweiten Anschlusswand (6b) oder an mindestens einen Anschlussboden oder an mindestens einen Wandübergang;
d) - Abziehen eines zweiten Silikonpapier-Streifens von dem zweiten, oberen Bereich des Dicht- und Montageband-Grundkörpers bzw. Trägermaterials;
e) - Ankleben des zweiten, oberen Bereichs des Dicht- und Montageband-Grundkörpers bzw. Trägermaterials an der ersten Anschlusswand (6a) und an der zweiten Anschlusswand (6b) oder an mindestens einen Anschlussboden oder an mindestens einen Wandübergang;
f) - plastisches Dehnen, Verformen und Anbringen des zweiten, oberen Bereichs des Dicht- und Montageband-Grundkörpers bzw. Trägermaterials hinein in das Eck (E) gebildet aus der ersten Anschlusswand (6a) und der zweiten Anschlusswand (6b) oder an den Anschlussboden oder Kombinationen hiervon;
g) - falls vorgesehen, Ausbreiten, oder falls wiederum vorgesehen, Ankleben eines waagerechten Schutzstreifens (18) an einer waagerechten Oberfläche (19) der Wannenabbordung;
h) - falls vorgesehen, Abziehen eines dritten und vierten Silikonpapier-Streifens von der wandseitigen Rückseite eines Zusatz-Dichtstreifens (15);
i) - falls vorgesehen, Ankleben eines Zusatz-Dichtstreifens (15) überlappend über den zweiten, oberen Bereich des Dicht- und Montageband-Grundkörpers bzw. Trägermaterials;
j) - Verlegen von Wandfliesen oder -platten (11, 11a-11d, 11f, 11g) überlappend über den zweiten, oberen Bereich des Dicht- und Montageband-Grundkörpers bzw. Trägermaterials;
k) - falls vorgesehen, Abreißen des waagerechten Schutzstreifens (18) an einer Längsperforation (20);
l) - Verfugen mit einer Abschluss-Silikonfuge (12, 12a-12f) zwischen dem unteren Rand der Wandfliesen oder -platten (11, 11a-11d, 11f, 11g) und der Wannenabbordung.

## Claims

1. A sealing and mounting tape arrangement (100, 100a-100e, 100h) for setting a shower tub or bathtub (3, 3a-3e, 3h) on at least one connection wall (6a-6g, 6j) or at least one connection floor, comprising a sealing and mounting tape base body or carrier material (1, 1a-1e, 1h) which forms a first, lower region (4, 4a-4e, 4h) with an tub-side adhesive surface (9a, 21a, 21c, 21e, 21g, 21k, 21m) towards a tub rim (2, 2a-2e, 2h) of the shower tub or bathtub (3, 3a-3e, 3h) and a second, upper region (5, 5a-5e, 5h) with a wall-side adhesive surface (9b, 21b, 21d, 21f, 21h, 211, 21n) towards the at least one connection wall, wherein the sealing and mounting tape base body or carrier material is made of a material which is plastically expandable and deformable in any direction (R), and wherein in the finish-assembled state, a continuous one-piece cover film (7, 7a-7e, 7h) arranged on the tube side at least at the second, upper region (5, 5a-5h) and at least from the lower edge of the second, upper region up to the upper edge of the second, upper region is also plastically expandable and deformable.

2. The sealing and mounting tape arrangement (100, 100a-100h) according to claim 1, wherein the material of the sealing and mounting tape base body or carrier material is self-adhesive and forms the adhesive surfaces (21a, 21c, 21e, 21g, 21k, 21m; 21b, 21d, 21f, 21h, 211, 21n) itself.

3. The sealing and mounting tape arrangement (100, 100c-100h) according to claim 1 or 2, wherein at the wall side or/and tub side, at least one sound protection strip (8, 8a-8c, 8e) is arranged on the first, lower region.

4. The sealing and mounting strip arrangement (100e) according to any one of the preceding claims, wherein the second, upper region (5e) of the sealing and mounting strip basic body (1e) is overlapped at the tub side by an additional sealing strip (15).

5. The sealing and mounting tape arrangement (100d, 100e, 100h) according to any one of the preceding claims, wherein the sealing and mounting tape arrangement (100d, 100e, 100h) comprises at least one cut protection strip (14, 14a, 14b).

6. The sealing and mounting tape arrangement (100c) according to any one of the preceding claims, wherein the sealing and mounting tape arrangement (100c) comprises at least one capillary protection strip (13).

7. The sealing and mounting tape arrangement (100f) according to any one of the preceding claims, wherein the sealing and mounting tape arrangement comprises a horizontal protection strip (18) which can be spread out on or adhered to a horizontal surface (19) of the tub rim (2f).

8. The sealing and mounting tape arrangement (100g) according to any one of the preceding claims, wherein the cover film (7g) is also arranged on the first, lower region (4g) and the sealing tape arrangement (100g), in cross-section, comprises at least one second butyl or adhesive layer (22, 22a).

9. A method for setting a shower or bath tub (3, 3a-3e, 3h) or for using a sealing and mounting tape arrangement (100, 100a-100e, 100h) according to any one of the preceding claims, with a plastically expandable or deformable sealing and mounting tape base body or carrier material (1, 1a-1e, 1h) and with a cover film (7, 7a-7e, 7h) which is likewise plastically expandable or deformable and is arranged at the tub side at least at the second, upper region (5, 5a-5h) and at least from the lower edge of the second, upper region (5, 5a-5e, 5h) up to the upper edge of the second, upper region of the sealing and mounting tape base body or carrier material, wherein the following method steps are carried out:
a) peeling off a first silicone paper strip from a first, lower region (4, 4a-4e, 4h) of the sealing and mounting tape base body or carrier material;
b) adhering the first, lower region of the sealing and mounting tape base body or carrier material to a tub rim (2, 2a-2e, 2h) of the shower tub or bathtub (3, 3a-3e, 3h);
c) setting the shower tub or bathtub in a corner (E) formed by a first connection wall (6a) and a second connection wall (6b) or on at least one connection floor or on at least one wall transition;
d) peeling off a second silicone paper strip from the second, upper region of the sealing and mounting tape base body or carrier material;
e) adhering the second, upper region of the sealing and mounting tape base body or carrier material to the first connection wall (6a) and to the second connection wall (6b) or to at least one connection floor or to at least one wall transition;
f) plastically expanding, deforming, and attaching the second, upper region of the sealing and mounting tape base body or carrier material into the corner (E) formed by the first connection wall (6a) and the second connection wall (6b) or on the connection floor or combinations thereof;
g) if provided for, spreading, or if provided for again, adhering a horizontal protective strip (18) to a horizontal surface (19) of the tub rim;
h) if provided for, peeling off a third and fourth silicone paper strip from the wall-side back of an additional sealing strip (15);
i) if provided for, adhering an additional sealing strip (15) in an overlapping manner over the second, upper region of the sealing and mounting tape base body or carrier material;
j) laying wall tiles or panels (11, 11a-11d, 11f, 11g) in an overlapping manner over the second, upper region of the sealing and mounting tape base body or carrier material;
k) if provided for, tearing off the horizontal protective strip (18) at a longitudinal perforation (20);
l) grouting with a silicone end joint (12, 12a-12f) between the lower edge of the wall tiles or panels (11, 11a-11d, 11f, 11g) and the tub rim).

## Revendications

1. Agencement de bande d'étanchéité et de montage (100, 100a-100e, 100h) pour la pose d'un bac de douche ou d'une baignoire (3, 3a-3e, 3h) sur au moins un mur de raccordement (6a-6g, 6j) ou au moins un sol de raccordement, avec un corps de base de bande d'étanchéité et de montage ou un matériau de support (1, la-le, 1h) formant une première région inférieure (4, 4a-4e, 4h) avec une surface de collage côté bac (9a, 21a, 21c, 21e, 21g, 21k, 21m) tournée vers une retombée de bac (2, 2a-2e, 2h) du bac de douche ou de la baignoire (3, 3a-3e, 3h) et une deuxième région supérieure (5, 5a-5e, 5h) avec une surface de collage côté mur (9b, 21b, 21d, 21f, 21h, 211, 21n) tournée vers l'au moins un mur de raccordement, dans lequel le corps de base de bande d'étanchéité et de montage ou le matériau de support est constitué d'un matériau extensible et déformable élastiquement dans des directions au choix (R) et dans lequel, dans l'état de montage final, une feuille de couverture (7, 7a-7e, 7h) unitaire continue disposée côté baignoire au moins sur la deuxième région supérieure (5, 5a-5h) et au moins à partir du bord inférieur de la deuxième région supérieure jusqu'au bord supérieur de la deuxième région supérieure est également extensible et déformable élastiquement.

2. Agencement de bande d'étanchéité et de montage (100, 100a-100h) selon la revendication 1, dans lequel le matériau du corps de base de bande d'étanchéité et de montage ou du matériau de support est autocollant et forme les surfaces de collage (21a, 21c, 21e, 21g, 21k, 21m ; 21b, 21d, 21f, 21h, 211, 21n) mêmes.

3. Agencement de bande d'étanchéité et de montage (100, 100c-100h) selon la revendication 1 ou **2,** dans lequel au moins un ruban d'insonorisation (8, 8a-8c, 8e) est disposé côté mur et/ou côté bac sur la première région inférieure.

4. Agencement de bande d'étanchéité et de montage (100e) selon l'une des revendications précédentes, dans lequel la deuxième région supérieure (5e) du corps de base de bande d'étanchéité et de montage (1e) est chevauchée côté bac par un ruban d'étanchéité supplémentaire (15).

5. Agencement de bande d'étanchéité et de montage (100d, 100e, 100h) selon l'une des revendications précédentes, dans lequel l'agencement de bande d'étanchéité et de montage (100d, 100e, 100h) comporte au moins un ruban de protection contre les coupures (14, 14a, 14b).

6. Agencement de bande d'étanchéité et de montage (100c) selon l'une des revendications précédentes, dans lequel l'agencement de bande d'étanchéité et de montage (100c) comporte au moins un ruban de protection capillaire (13).

7. Agencement de bande d'étanchéité et de montage (100f) selon l'une des revendications précédentes, dans lequel l'agencement de bande d'étanchéité et de montage comporte un ruban de protection horizontal (18) apte à être étendu ou collé sur une surface horizontale (19) de la retombée de bac (2f).

8. Agencement de bande d'étanchéité et de montage (100g) selon l'une des revendications précédentes, dans lequel la feuille de couverture (7g) est également disposée sur la première région inférieure (4g) et l'agencement de bande d'étanchéité (100g) comporte au moins une deuxième couche de butyle ou de colle (22, 22a) dans la section transversale.

9. Procédé de pose d'un bac de douche ou d'une baignoire (3, 3a-3e, 3h) ou d'utilisation d'un agencement de bande d'étanchéité et de montage (100, 100a-100e, 100h) selon l'une des revendications précédentes, avec un corps de base de bande d'étanchéité et de montage ou un matériau de support (1, la-le, 1h) extensible et déformable élastiquement et avec une feuille de couverture (7, 7a-7e, 7h) disposée côté baignoire au moins sur la deuxième région supérieure (5, 5a-5h) et au moins à partir du bord inférieur de la deuxième région supérieure (5, 5a-5e, 5h) jusqu'au bord supérieur de la deuxième région supérieure du corps de base de bande d'étanchéité et de montage ou du matériau de support, également extensible et déformable élastiquement,
dans lequel les étapes de procédé suivantes sont mises en œuvre :
a) détachement d'un premier ruban de papier de silicone par rapport à une première région inférieure (4, 4a-4e, 4h) du corps de base de bande d'étanchéité et de montage ou du matériau de support ;
b) collage de la première région inférieure du corps de base de bande d'étanchéité et de montage ou du matériau de support sur une retombée de bac (2, 2a-2e, 2h) du bac de douche ou de la baignoire (3, 3a-3e, 3h) ;
c) pose du bac de douche ou de la baignoire dans un coin (E) formé par un premier mur de raccordement (6a) et un deuxième mur de raccordement (6b) ou sur au moins un sol de raccordement ou sur au moins une transition de mur ;
d) détachement d'une deuxième bande de papier de silicone par rapport à la deuxième région supérieure du corps de base de bande d'étanchéité et de montage ou du matériau de support ;
e) collage de la deuxième région supérieure du corps de base de bande d'étanchéité et de montage ou du matériau de support sur le premier mur de raccordement (6a) et sur le deuxième mur de raccordement (6b) ou sur au moins un sol de raccordement ou sur au moins une transition de mur ;
f) extension élastique, déformation et application de la deuxième région supérieure du corps de base de bande d'étanchéité et de montage ou du matériau de support dans le coin (E) formé par le premier mur de raccordement (6a) et le deuxième mur de raccordement (6b) ou sur le sol de raccordement ou une combinaison de ceux-ci ;
g) le cas échéant, étalement, ou encore le cas échéant, collage d'un ruban de protection horizontal (18) sur une surface horizontale (19) de la retombée de bac ;
h) le cas échéant, détachement d'un troisième et d'un quatrième ruban de papier de silicone par rapport à la face arrière côté mur d'un ruban d'étanchéité supplémentaire (15) ;
i) le cas échéant, collage d'un ruban d'étanchéité supplémentaire (15) de façon chevauchante sur la deuxième région supérieure du corps de base de bande d'étanchéité et de montage ou du matériau de support ;
j) pose de carrelage ou de panneaux muraux (11, 11a-11d, 11f, 11g) de façon chevauchante sur la deuxième région supérieure du corps de base de bande d'étanchéité et de montage ou du matériau de support ;
k) le cas échéant, arrachage du ruban de protection horizontal (18) au niveau d'une perforation longitudinale (20) ;
l) jointage avec un joint de silicone final (12, 12a-12f) entre le bord inférieur du carrelage ou des panneaux muraux (11, 11a-11d, 11f, 11g) et la retombée de bac.
